# EUROPEAN PATENT APPLICATION

(11) **EP 4 040 794 A1**
(43) Date of publication of application: **10.08.2022**
(21) Application number: 22155663.2
(22) Date of filing: 08.02.2022
(51) Int. Cl.: H04N 21/234, H04N 21/262, H04N 21/43, H04N 21/432, H04N 21/439, H04N 21/44, H04N 21/647, H04N 21/6587, H04N 21/81, H04N 21/845, G11B 27/00, G11B 27/034, G11B 27/10, G11B 27/28

(54) **SYSTEMS AND METHODS FOR ADAPTIVE OUTPUT**

(30) Priority: 08.02.2021 US 202163147179 P
(71) Applicant: Comcast Cable Communications LLC, Philadelphia, Pennsylvania 19103 (US)
(72) Inventor: BEGAN, Ali C., Philadelphia, 19103 (US); SYED, Yasser, Philadelphia, 19103 (US)
(74) Representative: V.O.

(57) **Abstract**

Based on characteristics associated with content, at least one portion of the content during which an output speed change satisfies a threshold may be determined. The threshold may be a "detectability" threshold, indicative of whether a viewer of the content may detect an output speed change during that portion of the content. The at least one portion of the content during which an output speed change satisfies the threshold may be associated with a rate of speed change. During output of the content, if it is determined that an output speed change is necessary, the output speed may be changed during the at least one portion in accordance with the rate of speed change.

## Description

### BACKGROUND

End-to-end live latency measures a delay between when a frame is captured on a transmitting device and the instant when it is displayed on the receiving device. Both conventional television systems and streaming solutions experience latency. However, the experience of a viewer may be negatively impacted by latency. For example, a viewer of a live-streaming video may become frustrated if a significant delay exists between an event occurring in the live stream and when that event is displayed on the viewer's television. Therefore, latency improvements without risking an uninterrupted output, or playback, are needed.

### SUMMARY

Methods and systems are disclosed for adaptive output (e.g., playback, present, show, display, etc.) of content. At least one portion of the content that is a good candidate for an output speed change may be determined. The at least one portion of the content that is a good candidate for an output speed change may include portions of the content during which an output speed change may not be detectable to (or perceived by) viewers of the content. The at least one portion of the content that is a good candidate for a n output speed change may be associated with a rate of speed change, indicative of how drastically the output speed may be increased or decreased during the portion without being easily detectable to viewers of the content. During output of the content, if it is determined that an output speed change is needed, the output speed change may be implemented during the at least one portion in accordance with the rate of speed change.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 illustrates a block diagram of an example environment according to an embodiment of the present disclosure;
FIG. 2 illustrates a block diagram of an example encoder according to an embodiment of the present disclosure;
FIG 3 illustrates a flow chart of an example method according to an embodiment of the present disclosure;
FIG 4 illustrates a flow chart of an example method according to an embodiment of the present disclosure;
FIG 5 illustrates a flow chart of an example method according to an embodiment of the present disclosure; and
FIG. 6 illustrates a block diagram of an example computing device according to an embodiment of the present disclosure.

### DETAILED DESCRIPTION OF ILLUSTRATIVE EMBODIMENTS

End-to-end, or glass-to-glass, live latency measures the delay between a frame being captured on a transmitting device, such as a camera, and the frame being displayed on a receiving device, such as a television or computer screen. A variety of components contribute to latency. For example, there are several stages of processing required to make the pixels captured by a camera visible on a display, and delays associated with each of these processing stages contribute to latency. Additionally, the time required for transmitting the content to the display contributes to latency.

The biggest contributors to latency are those processing stages that require temporal storage of data, such as buffering. Buffering refers to downloading a certain amount of data before output of the content. Despite being one of the biggest contributors to latency, buffering is essential. For example, when expected data does not arrive to the player on time, buffered data may be the only thing that the player can continue to decode and output, thus preventing stalling of the content. While buffer size may be reduced in order to reduce latency, a reduction in buffer size may require a larger amount of bandwidth or a bandwidth that is larger than a certain value. If a player could be certain that bandwidth would never drop in such a way as to delay delivery of the content, a buffer size reduction may not be problematic. However, in practice, there is no such guarantee-the player must balance a desire for low latency with the desire to prevent stalling.

Conventional television systems, including satellite, cable, and over-the-air broadcast, may have a latency of ten seconds or less while streaming solutions may have a higher latency, such as a latency of 45 seconds or more. For higher latency streaming solutions, an encoder may try to encode the best quality video for the anticipated bitrate capability of the player. To fit the anticipated bitrate, the encoder may apply temporal compression. By applying temporal compression, some past and future frames may act as a reference for other frames, which may provide the encoder with time to examine the content of upcoming frames. The reference frames may need to be decoded first so that they are available for the other frames that need them, and this may create a buffer of out-of-order frames. At the same time, the decoder/player may need to output a continuous set of ordered frames.

However, the decoder/player may have a limited buffer size. The buffer may include a balance of what comes into the buffer and what decoded frames are removed. The decoded frames may need to be output a rate which meets the constant frames per second (FPS) rate of the produced content. However, it may not be possible to output the decoded frames at the constant FPS if there is either a buffer "underflow" or a buffer "overflow."

If a buffer "underflow" occurs, there may not be enough buffered data to produce an output frame. This may result in a "stall." A "stall" may result in a black frame or a frozen last-output frame because there is no frame available to output at the constant FPS needed for the constant anticipated frame rate. A buffer "underflow" may occur when the content stream gets packetized, or when the content stream gets encapsulated into IP packets for delivery over a network. If the bandwidth of the network is large enough to always handle the bitrate of the stream, then the buffer of the decoder/player is always filled with incoming data at the appropriate time. However, if the network gets congested or otherwise faces an error, then this may affect the delivery rate of the packets. As a result, the buffer may not get filled at the appropriate time and data may enter the buffer in spurts, causing a buffer "underflow." Conversely, if a buffer "overflow" occurs, there may be no room for additional data in the buffer, as the buffer only has a limited size. A buffer "overflow" may cause data to be lost-which may result in lost frames that are never output.

Some more recent low-latency streaming approaches may have latencies on par with conventional television systems, such as ten seconds or less. However, these low-latency streaming approaches may be more prone to stall outs. With higher-latency streaming approaches, the buffer is usually large enough to absorb these spurts/pauses of data packets and to adapt to some bandwidth connection variances. Conversely, these low-latency streaming approaches may be more prone to stall outs because the buffer size of the decoder/players associated with low-latency streaming approaches shrinks significantly.

Some low-latency streaming approaches may allow the decoder/player to vary its output frame rate. Allowing the decoder/player to vary its output FPS may be helpful, for example, when a buffer "underflow" occurs, as the output FPS may build up a playout delay with respect to the anticipated content playout. To build up the playout delay, the output FPS may be slowed down to ensure that a frame will be output without creating a stall out. For example, the content may be supposed to have a constant FPS of 30, and the decoder/player may slow the output down to 10 FPS. In other words, the playout may be delayed with respect to the regular playout of the content. When the output FPS is slowed down, the stream data may continue to enter the buffer in spurts, and eventually all of the frames may enter the buffer. If one displays all of the frames and attempts to keep up with the calculated content FPS, then the built-up playout latency may remain the same or may keep on building with future underflows. To slow down the output FPS, many low-latency streaming approaches may blindly slow down the output FPS at any point in the content stream. Alternatively, to increase the buffer size once playback has begun, the player may stall the video for some time period before continuing playback.

Similarly, allowing the decoder/player to vary its output FPS may be helpful, for example, to reduce latency. To reduce latency, the decoder/player may speed up the playout rate over time to reduce playout delay. To speed up the playout rate over time, many low-latency streaming approaches may blindly speed up the playout rate at any point in the content stream. Alternatively, to reduce latency, the decoder/player may drop frames, or "jump ahead" to a position in the content closer to the live edge. However, this may be just as undesirable as stall outs. However, both of these techniques for reducing the buffer size may be detectable by a viewer of the content, thus resulting in a negative viewing experience.

Accordingly, it may be desirable to reduce latency, such as live-streaming latency, while avoiding the difficulties described above. For example, it may be desirable to reduce latency through adaptive output (e.g., playback, display, etc.). However, rather than blindly adjusting the output speed of content whenever the buffer size needs to be increased or decreased, it may be desirable to intelligently adjust the output speed of content. For example, it may be desirable to signal to the encoder to adjust the output speed of content during certain portions of the content when an output speed change is less detectable to viewers of the content. The signal may be sent to the encoder by a content playback system, and the signal may identify these portions of the content when an output speed change is less detectable to viewers of the content. The encoder may then send the signal in the stream of content, or out of band.

It may additionally, or alternatively, be desirable to signal to a player when the output speed of content can be adjusted while being less detectable to viewers. The player may read the signal and known when in the content it can adjust the output speed while being less detectable to viewers. If a signal is sent to a player indicating when the output speed of the content can be adjusted, the signal may be sent to the player from an encoder. A output speed change may be less detectable to viewers, for example, during a portion of the content that contains less motion or less speech/conversational audio. By changing the output speed of content during these portions of the content, latency may be reduced or increased as desired. Accordingly, the buffer size is also reduced or increased as desired.

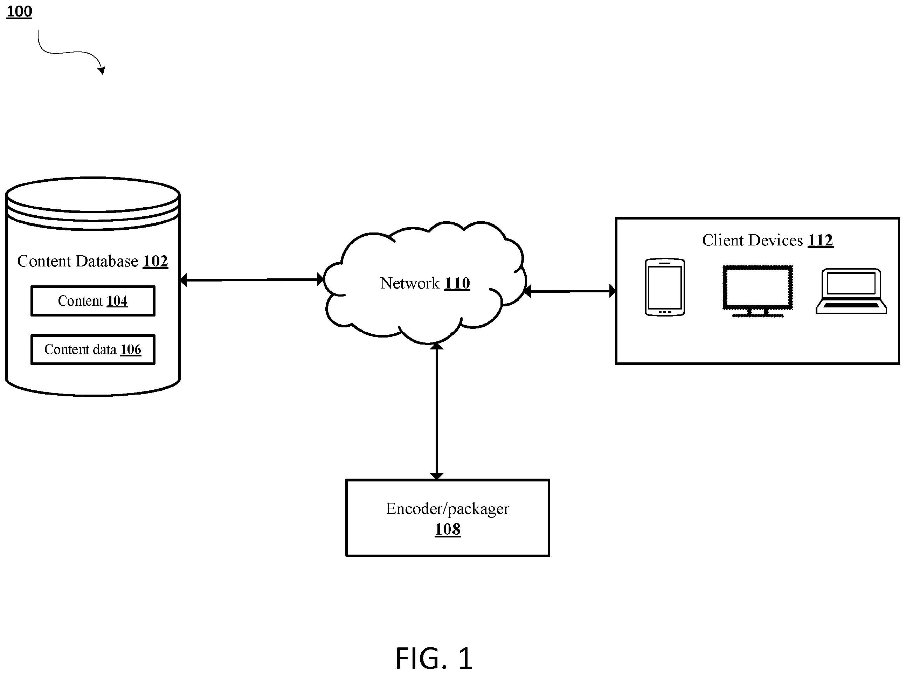

FIG. 1 illustrates an example hardware and network configuration in which the systems and methods described herein may be implemented. Such a hardware and network configuration may include a content database 102, an encoder 108, and at least one device 112. The content database 102, the encoder 108, and the at least one device 112 may be in communication via a network 110. The content database 102, the encoder 108, or the at least one device 112 may be associated with an individual or entity seeking to reduce latency, such as live-streaming latency.

The encoder 108 may implement a number of the functions and techniques described herein. For example, the encoder 108 may receive, from the content database 102, content, such as content 104. The content 104 may include, for example, video content. Video content may refer generally to any video content produced for viewer consumption regardless of the type, format, genre, or delivery method. Video content may comprise video content produced for broadcast via over-the-air radio, cable, satellite, or the internet. Video content may comprise digital video content produced for digital video streaming or video-on-demand. Video content may comprise a movie, a television show or program, an episodic or serial television series, or a documentary series, such as a nature documentary series. As yet another example, video content may include a regularly scheduled video program series, such as a nightly news program. The content 104 may be associated with one or more content distributors that distribute the content 104 to viewers for consumption.

The encoder 108 may receive, from the content database 102, content data, such as the content data 106. The content data 106 may be metadata associated with content, such as the content 104. The content data 106 may indicate information about the content. For example, the content data 106 may indicate a genre associated with the content. Content may be associated with one or more genres, including sports, news, music or concert, documentary, or movie. For example, if the content is associated with the genre "sports," this may indicate that the content is a sports game, such as a livestream of a sports game.

The content data 106 may indicate a rate of speech associated with the content. For example, the content data 106 may indicate which portions of content include the most or the least speech. If the content includes subtitles, the subtitles may indicate the rate of speech. If the content includes closed captioning, the subtitles may be part of the content track. The presence or absence of dialogue may be detected through subtitling, for example, using SEI messages in the video elementary stream. If the subtitles for content are part of a separate track, the absence of dialogue may be detected, for example, by detecting an "empty segment."

The content data 106 may indicate a rate of movement associated with the content. For example, the content data 106 may indicate which portions of content include the most motion or the least motion. The movement associated with the content 104 may be based on the encoding parameters of the content 104. The movement associated with the content 104 may include camera movement, where the entire scene moves. For example, if the content is a soccer game, camera movement may involve a camera panning over the soccer field. The movement associated with the content 104 may additionally, or alternatively, include movement of objects in the content. For example, if the content is a soccer game, object movement may involve the soccer ball being kicked.

The encoder 108 may use the content 104 and content data 106 to determine portions of content that are candidates for output speed change. For example, a scene change in the content 104 may be indicative of a start of a new portions of the content 104. A scene in the content 104 may be a single camera shot of an event. A scene change may occur when a viewer perspective is switched to a different camera shot. Some latency for encoding the stream may be helpful, for example, to provide information about portions of the content 104 to the encoder 108. If there is a delay of a small number of frames, this may provide the encoder with time to look at frames as a group of frames. The delay may not be large. For example, the delay may be a half-second delay. With this delay, the encoder 108 may look at, for example, a group of 30 frames for a 60 FPS video feed. With this number of frames, the encoder 108 may detect scene changes, which may be helpful in defining the start of new portions of the content 104. Additionally, the delay may even be helpful when determining the rate of movement or the rate of speech associated with the content 104.

As discussed above, it may be desirable to adjust the output speed of content during certain portions of the content when an output speed change is not as detectable to viewers of the content. An output speed change may be less detectable to viewers, for example, during a portion of the content that contains less motion or less speech. For example, a scenery shot without any dialogue may be a good candidate for an output speed change. Accordingly, the encoder 108 may use the content 104 and content data 106 to determine portions of content that do not contain large amounts of motion or speech. Different genres may be able to be sped up or slowed down at different rates or for different periods of time without being easily detectable to viewers of the content. For example, for sports content, output may be sped up or slowed down for only for 5 seconds or during a timeout with less motion. For news content, output may be sped up or slowed down for only for 10 seconds or during transitions between stories. For concert or music content, output may be sped up or slowed down at any time but only for 2 seconds.

The encoder 108 may use the content 104 and content data 106 to determine a rate of output speed change associated with each portion of content that is a good candidate for output speed change. The rate of output speed change associated with a particular portion of content may indicate how rapidly output of content may be sped up or slowed down during that portion of content without being easily detectable to viewers of the content. For example, an output rate in the range of 90-120% of the constant FPS for a stream of content may not be easily detectable to viewers of the content. If the stream of content has a constant FPS of 60, and the output rate is slowed down to 90%, then the new output rate may be 54 FPS, which means a frame may be output approximately every 18 milliseconds as opposed to every 16.7 milliseconds. Likewise, if the stream of content has a constant FPS of 60, and the output rate is sped up to 120%, then the new output rate may be 72 FPS, which means a frame may be output approximately every 13.8 milliseconds as opposed to every 16.7 milliseconds.

The rate of output speed change associated with a particular portion may be dependent on the rate of movement or rate of speech associated with that portion. For example, portions including object movement may be more sensitive to an output rate change than portions including camera movement. An acceptable rate of speed change for a portion containing dialogue may be smaller than the acceptable rate of speed change for a portion containing little or no dialogue. For example, speeding up a constant FPS of 30 to 35 for a portion containing dialogue may be tolerable for the audio pitch without needing to adjust frequency. It may be easier to speed up the output rate or slow down the output rate more in portions of the content containing little or no dialogue. For example, an output rate change may be less noticeable during a short dialogue than during a long speech.

The rate of output speed change may be dependent upon the genre of content. Different genres may be able to be sped up or slowed down at different rates without being easily detectable to viewers of the content. For example, a news program may feature a newscaster talking. Based on the fact that the content is a news program, it may be determined that the content output may be sped up, such as at a certain rate, without making viewing the news program intolerable to viewers. This output speed change may be generally applied to the entire content, or to portions of the content. For example, for sports content, output may be sped up to a maximum output rate of 120% (e.g., 20% faster than normal speed) or output may be slowed down to a minimum output rate of 90% (e.g., 10% slower than normal speed). For news content, output may be sped up to a maximum output rate of 110% or may be slowed down to a minimum output rate of 90%. For concert or music content, output may be sped up to a maximum output rate of 105% or may be slowed down to a minimum output rate of 95%.

The encoder 108 may generate one or more encoded bitstreams associated with content, such as the content 104. The encoded bitstreams generated by the encoder 108 may include indications of the portions of the content that are good candidates for output speed change. The indication can be, for example, further metadata including a start time, an end time, and ranges for the maximum and minimum output rates for each portion. For example, the encoded bitstreams generated by the encoder 108 may indicate start times of these portions and durations of these portions. The encoded bitstreams generated by the encoder 108 may also include indications of the rate of output speed change associated with each portion of the content that is a good candidate for output speed change. For example, the encoded bitstreams generated by the encoder 108 may indicate how much output of content may be sped up or slowed down during that portion of content without being easily detectable to viewers of the content.

As noted, the content database 102 may provide the content and the content data to the encoder 108. The content database 102 may be integrated with one or more of the encoder 108 or the at least one device 112. The network 110 may comprise one or more public networks (e.g., the Internet) and/or one or more private networks. A private network may include a wireless local area network (WLAN), a local area network (LAN), a wide area network (WAN), a cellular network, or an intranet. The network 110 may comprise wired network(s) and/or wireless network(s).

As noted, the content database 102, the encoder 108, and the at least one device 112 may each be implemented on the same or different computing devices. For example, the content database 102 can be located in a datastore of the same organization as the encoder 108, or in the datastore of a different organization. Such a computing device may comprise one or more processors and memory storing instructions that, when executed by the one or more processors, cause the computing device to perform one or more of the various methods or techniques described here. The memory may comprise volatile memory (e.g., random access memory (RAM)) and/or non-volatile memory (e.g., a hard or solid-state drive). The memory may comprise a non-transitory computer-readable medium.

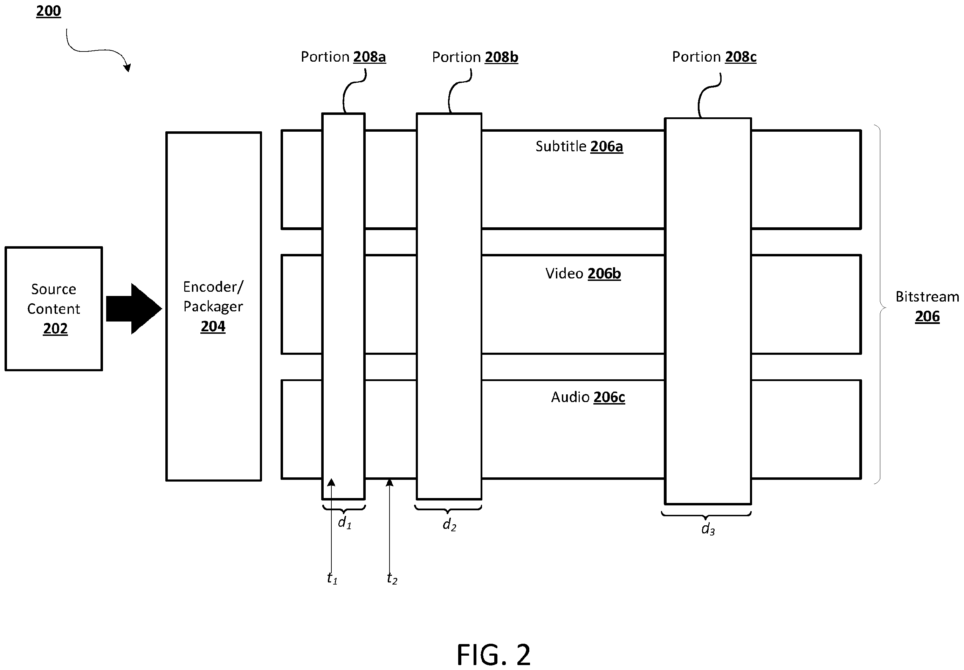

FIG. 2 illustrates an exemplary encoding environment 200. The encoding environment 200 may include source content 202, an encoder/packager 204, and an encoded bitstream 206. The source content 202 may include content, such as content 104, and content data, such as content data 106. The source content 202 may be input into the encoder/packager 204. For example, the encoder/packager 204 may be the encoder 108 of FIG. 1. The encoder/packager 204 may generate the encoded bitstream 206 associated with the source content 202. For example, the encoded bitstream 206 may include one or more of a subtitle bitstream 206a, a video bitstream 206b, or an audio bitstream 206c. If the encoded bitstream 206 includes the subtitle bitstream 206a, the subtitle bitstream 206a may indicate subtitle data associated with the source content 202. If the encoded bitstream 206 includes the video bitstream 206b, the video bitstream 206b may indicate video data associated with the source content 202. If the encoded bitstream 206 includes the audio bitstream 206c, the audio bitstream 206c may indicate audio data associated with the source content 202.

The encoded bitstream 206 may include at least one indication of portions of content that are good candidates for output speed change, such as portions 208a-c. As discussed above, it may be desirable to adjust the output speed of content during certain portions of the content when an output speed change is less detectable to viewers of the content. Accordingly, the portions 208a-c may be portions of content during which an output speed change may not be easily detectable by viewers of the content. The encoded bitstream 206 may indicate at least one of a start time associated with each of these portions of content or a duration of each of these portions of content. For example, the encoded bitstream 206 may indicate that the portion 208a has a duration *d₁,* the portion 208b has a duration *d*₂, and the portion 208c has a duration *d₃*. The durations of the different portions may be different or may be the same. The encoded bitstream 206 may include an indication of a rate of output speed change associated with each portion of content that is a good candidate for output speed change, such as the portions 208a-c. As discussed above, the rate of output speed change associated with a particular portion of content may indicate how much output of content may be sped up or slowed down, or both sped up and slowed down, during that portion of content without being easily detectable to viewers of the content. For example, output of content may be either sped up or slowed down during a portion of content in a scenery view that contains no dialogue. The encoded bitstream 206 may be used by a device, such as the at least one device 112 of FIG. 1, to output the content associated with the source content 202 and to adjust the output speed of the content during the portions 208a-c.

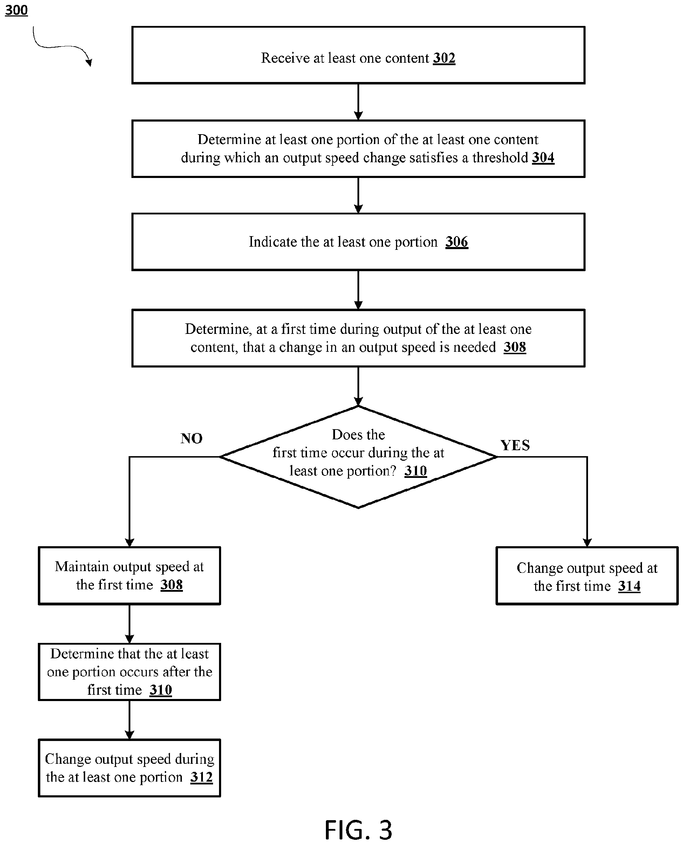

FIG. 3 illustrates an exemplary method 300 for adaptive output of content, such as the content 104 associated with FIG. 1. The method 300 may be performed, for example, by the system 100 of FIG. 1. Content, such as a livestreaming video content, may be received. Characteristics associated with the content, such as genre, rate of speech, or rate of movement, may be used to determine portions of the content that are good candidates for an output speed change. The portions of the content that are good candidates for an output speed change may include those portions of the content during which an output speed change may not be easily detected by viewers of the content. Each of these portions may be associated with a rate of output speed change. The rate of output speed change associated with a particular portion of content may indicate how rapidly output of content may be sped up or slowed down during that portion of content without being easily detected by viewers of the content. These portions of the content and their respective rates of output speed change may be indicated. For example, these portions of the content and their respective rates of output speed change may be indicated in an encoded bitstream associated with the content, such as the encoded bitstream 206 of FIG. 2.

At step 302, at least one content may be received. For example, the at least one content may be received by an encoder, such as the encoder 108 or the encoder/packager 204. The at least one content may include video content, such as livestreaming video content. For example, the at least one content may include a livestreaming concert, sports program, news program, documentary, or movie. The at least one content may be associated with one or more characteristics, such as genre, rate of speech, or rate of movement. For example, if the at least one content is associated with a genre, the genre may indicate if the at least one content is sports, news, music or concert, documentary, or movie content. If the at least one content is associated with a rate of speech, the rate of speech may indicate which portions of content include the most speech. If the content includes subtitles, the subtitles may indicate the rate of speech. If the at least one content is associated with a rate of movement, the rate of movement may indicate which portions of content include the most motion or the least motion. For example, an action scene in a movie may contain more motion than a slow-moving scene, such as a transition scene.

At step 304, at least one portion of the at least one content that is a good candidate for an output speed change may be determined. The at least one portion of the at least one content may include portions during which an output speed change satisfies a threshold. The threshold may be a "detectability" threshold, indicative of whether a viewer of the at least one content may be able to detect an output speed change. A portion of the at least one content may satisfy the threshold if a viewer of the at least one content may not be able to detect an output speed change during that particular portion. To determine portions of the at least one content that satisfy the threshold, characteristics associated with the at least one content may be used.

For example, at least one of a genre, rate of speech, or rate of movement associated with the at least one content may be used to determine those portions of the at least one content that satisfy the threshold. An output speed change may be less detectable to viewers during a portion of the content that contains less motion or less speech. Accordingly, those portions of the at least one content that do not contain large amounts of motion or speech may be determined to be good candidates for an output speed change. Different genres may be able to be sped up or slowed down for different periods of time without being easily detectable to viewers of the content. For example, for sports content, output may be sped up or slowed down at any time but only for 5 seconds. For news content, output may be sped up or slowed down at any time but only for 10 seconds. For concert or music content, output may be sped up or slowed down at any time but only for 2 seconds. Accordingly, the portions of the at least one content that are good candidates for an output speed change may be limited to a particular period of time.

Determining the at least one portion of the at least one content that is a good candidate for an output speed change may comprise determining a rate of output speed change associated with each portion of content that is a good candidate for output speed change. The rate of output speed change associated with a particular portion of content may indicate how rapidly output of content may be sped up or slowed down during that portion of content without being easily detectable to viewers of the content. As discussed above, the rate of output speed change may be dependent upon the genre of content. Different genres may be able to be sped up or slowed down at different rates without being easily detectable to viewers of the content. For example, for sports content, output may be sped up to a maximum output rate of 120% or output may be slowed down to a minimum output rate of 90%. For news content, output may be sped up to a maximum output rate of 110% or may be slowed down to a minimum output rate of 90%. For concert or music content, output may be sped up to a maximum output rate of 105% or may be slowed down to a minimum output rate of 95%.

At step 306, the at least one portion of the at least one content during which the output speed change satisfies the threshold may be indicated. For example, indications of the at least one portion may be inserted into a bitstream associated with the at least one content. The bitstream may be an encoded bitstream, such as the encoded bitstream 206 of FIG. 2. Each rate of output speed change associated with each portion of content may also be indicated. For example, an indication of the rate of output speed change associated with each portion of content may also be inserted into the bitstream associated with the at least one content.

The player associated with output of the at least one content may use the indications of the at least one portion of the at least one content during which the output speed change satisfies the threshold in order to reduce latency. For example, the player may use the encoded bitstream, including the indications of the portions and the portion's respective rates of output speed change, in order to reduce latency associated with output of the at least one content on a device. To reduce latency, the player may increase the output speed of the content during the at least one portion of the at least one content during which the output speed change satisfies the threshold.

If latency associated with output of the at least one content is high enough, a viewer of the at least content may have a negative viewing experience. For example, if the latency is too high, then output of the at least one content may be noticeably delayed when compared to the real-time broadcast of the at least one content. Such a delay may make it difficult for the viewer to engage and interact with the at least one content as it is unfolding in real time. At step 308, it may be determined that a change in an output speed is needed. A change in output speed may be needed if the latency associated with output of the at least one content is high enough to negatively impact viewer experience. For example, a change in output speed may be needed if output of the at least one content is noticeably delayed when compared to the real-time broadcast of the at least one content. Output of the at least one content may be noticeably delayed if the latency associated with the output exceeds a target latency. The target latency may, for example, be a preferred latency value or a system or service requirement.

It may be determined at a first time during output of the at least one content that a change in output speed is needed. For example, referring back to FIG. 2, it may be determined at time t₁ or t₂ during output of the at least one content that a change in output speed is needed. The first time, such as time t₁ or t₂, may occur after output of the at least one content has already started. For example, the first time, such as time t₁ or t₂, may occur several second, minutes, or hours after output of the at least one content has already started. The first time, such as time t₁ or t₂, may be the time at which the latency has become high enough that output of the at least one content is noticeably delayed when compared to the real-time broadcast of the at least one content.

If the first time, such as time t₁, occurs during the at least one portion of the at least one content during which the output speed change satisfies the threshold, then output speed of the at least one content may immediately be adjusted at the first time. For example, as shown in FIG. 2, time t₁ occurs during the portion 208a. As discussed above, the at least one portions of the at least one content during which the output speed change satisfies the threshold include those portions of the at least one content that are good candidates for an output speed change. The at least one portion of the at least one content may be a good candidate for an output speed change if a viewer of the at least one content may not be able to easily detect an output speed change during that portion. If the first time, such as time t₁, occurs during the at least one portion of the at least one content during which the output speed change satisfies the threshold, then adjusting the output speed of the at least one content at the first time would not be easily detectable to a viewer of the at least one content. For example, a viewer may not be able to detect an output speed adjustment during a slow-motion scene, or during a scene with little dialogue. Accordingly, the output speed of the at least one content may immediately be adjusted at the first time in order to reduce the latency.

However, if the first time, such as time t₂, does not occur during the at least one portion of the at least one content during which the output speed change satisfies the threshold, then the output speed may not be adjusted at the first time. For example, as shown in FIG. 2, time t₂ occurs after the portion 208a and before the portion 208b. If the first time, such as time t₂, does not occur during the at least one portion of the at least one content during which the output speed change satisfies the threshold, then adjusting the output speed of the at least one content at the first time may be easily detectable to a viewer of the at least one content. For example, a viewer may able to easily detect an output speed adjustment during a fast-paced scene, or during a scene with a lot of dialogue. Accordingly, if the first time, such as time t₁, does not occur during the at least one portion of the at least one content during which the output speed change satisfies the threshold, then the output speed may need to be adjusted at a later time during output in order to reduce the latency.

At step 310, it may be determined whether the first time occurs during the at least one portion of the at least one content during which the output speed change satisfies the threshold. If the first time occurs during the at least one portion of the at least one content during which the output speed change satisfies the threshold, the method 300 may proceed to step 314. As discussed above, if the first time, such as time t₁, occurs during the at least one portion of the at least one content during which the output speed change satisfies the threshold, such as the portion 208a, then output speed of the at least one content may immediately be adjusted at the first time. At step 314, the output speed of the at least one content may be changed at the first time. By adjusting the output speed of the at least one content at the first time, the latency associated with the output may be reduced. This reduction in latency may improve viewer experience, as the output of the at least one content may no longer be noticeably delayed when compared to the real-time broadcast of the at least one content.

Conversely, if it is determined that the first time, such as time t₂, does not occur during the at least one portion of the at least one content during which the output speed change satisfies the threshold, the method may proceed to step 308. As discussed above, if the first time, such as time t₂, does not occur during the at least one portion of the at least one content during which the output speed change satisfies the threshold then output speed of the at least one content may not be immediately adjusted at the first time. Rather, at step 308, the output speed of the at least one content may be maintained at the first time. For example, referring to FIG. 2, if it is determined at time t₂ that a change in output speed is needed, then the output speed of the at least one content may be maintained at time t₂ because time t₂ does not occur during any of portions 208a-c.

To reduce the latency associated with the output of the at least one content, the output speed of the at least one content may need to be adjusted at a later time, such as at a time that occurs after the first time. At step 310, it may be determined that a start time of the at least one portion of the at least one content during which the output speed change satisfies the threshold follows the first time. For example, referring to FIG. 2, if it is determined at time t₂ that a change in output speed is needed, then it may be determined that a start time of at least one of portions 208b or 208c occur after time t₂. To reduce latency associated with output of the at least one content, the output speed of the at least one content may need to be adjusted at the start time of at least one of the portions that occurs after the first time, such as at least one of the portions 208b or 208c. At step 312, the output speed of the at least one content may be changed at the start time of the at least one portion of the at least one content during which the output speed change satisfies the threshold, such as the portions that occur after the first time. By adjusting the output speed of the at least one content at the start time of at least one of the portions that occur after the first time, the latency associated with the output may be reduced. This reduction in latency may improve viewer experience, as the output of the at least one content may no longer be noticeably delayed when compared to the real-time broadcast of the at least one content.

While the adaptive output techniques described above may be used to synchronize output of content with a real-time broadcast of that content, it may additionally or alternatively be desirable to synchronize output of content on more than one device, such as the at least one device 112 of FIG. 1. For example, multiple devices, such as televisions, mobile phones, or tablets, may all be streaming the same content, such as a sports program, in a bar. It may be desirable for all of these devices in the same bar to output the content at the same time, or close to the same time. However, each of the multiple devices may be associated with a different player output latency. As a result, each of the multiple devices may become out of sync. For example, if one television in the bar outputs an important event in the content, such as a touchdown in a football game, before the other devices in the bar, this may result in a negative viewer experience. Viewers associated with the other devices may become frustrated that they were not able to see the important event close to when it occurred in real time.

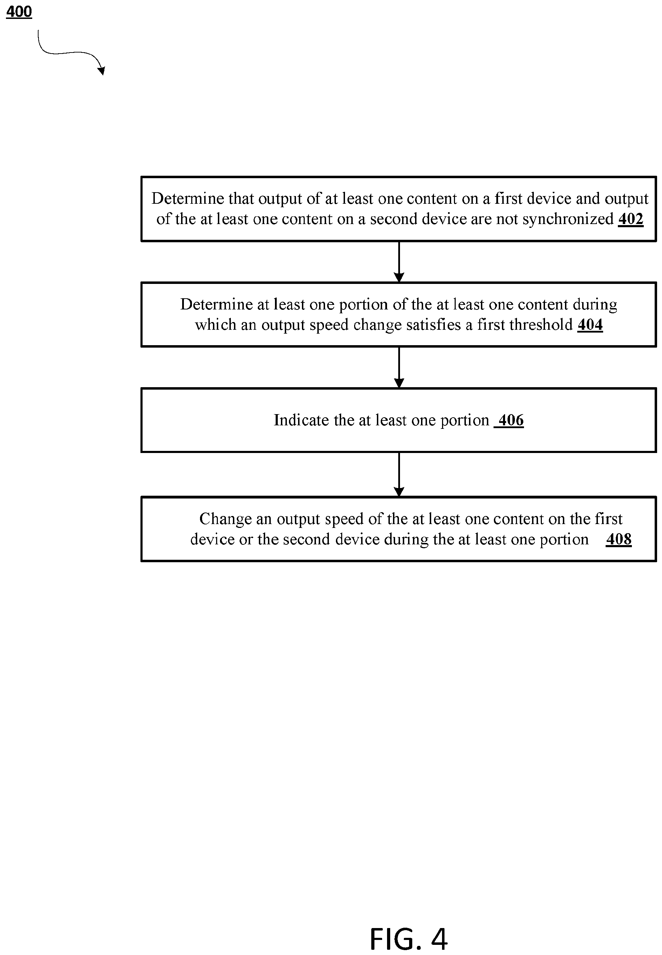

FIG. 4 illustrates an exemplary method 400 for adaptive output of content, such as the content 104 associated with FIG. 1. The method 400 may be performed, for example, by the system 100 of FIG. 1. The method 400 may be used to synchronize output of content on a plurality of devices. For example, the method 400 may be used to synchronize output of content on a plurality of devices by adjusting, for each of the plurality of devices, the player output latency to equal a target latency. The target latency may be a non-zero constant player latency that each of the plurality of devices at different bandwidth data rates are able to handle.

At step 402, it may be determined that output of at least one content on a first device and output of the at least one content on a second device are not synchronized. To determine that output of the at least one content on the first device and output of the at least one content on the second device are not synchronized, it may be determined that the first and seconds devices are associated with different player output latencies. For example, it may be determined that output of the at least one content on the first device is seconds or minutes ahead of output of the at least one content on the second device. If the first and second devices are located at the same premises, such as at the same home, restaurant or bar, then this lack of synchronization between output on the first and second devices may be particularly noticeable to viewers of the at least one content at that premises. For example, if the content is a football game, and a touchdown is output on the first device 5 seconds before it is output on the second device, then the viewer associated with the second device may become frustrated that he was not able to view the touchdown at the same time as the viewer associated with the first device.

The at least one content may include video content, such as livestreaming video content. For example, the at least one content may include a livestreaming concert, sports program, news program documentary, or movie. The at least one content may be associated with one or more characteristics, such as genre, rate of speech, or rate of movement. For example, if the at least one content is associated with a genre, the genre may indicate if the at least one content is sports, news, music or concert, documentary, or movie content. If the at least one content is associated with a rate of speech, the rate of speech may indicate which portions of content include the most speech. If the content includes subtitles, the subtitles may indicate the rate of speech. If the at least one content is associated with a rate of movement, the rate of movement may indicate which portions of content include the most motion or the least motion. The rate of movement associated with the at least one content may be determined, for example, using motion vectors of an object within one or more scenes of the at least one content. For example, an action scene in a movie may contain more motion than a slow-moving scene, such as a transition scene.

Determining that output of the at least one content is not synchronized on the first and second devices may comprise determining that a latency associated with output on either the first or second device, or both the first and second devices, exceeds a target latency. The target latency may be a preferred latency, or a system or service requirement. The target latency may be a constant player latency that both the first and second device are able to handle. For example, if the target latency is one second, and a latency associated with output on the first device is three seconds, then the latency associated with output on the first device exceeds the target latency. Determining that output of the at least one content is not synchronized on the first and second devices may additionally or alternatively comprise determining that a latency associated with output on either the first or second device, or both the first and second devices, is less than the target latency. For example, if the target latency is one second, and a latency associated with output on the second device is half of a second, then the latency associated with output on the second device is less than the target latency.

Determining that output of the at least one content is not synchronized on the first and second devices may additionally or alternatively comprise receiving user input. The user input may be received, for example, from a user associated with either the first or second device. The user input may indicate whether output of the at least one content is synchronized on the first and second devices. The user input may include, for example, social media input. If the user input includes social media input, the user input may include tweets. The user input may be used, at least in part, to determine how far out of sync the first and second devices are.

The first and second devices may be out of sync if either the first or second device, or both the first and second device, are associated with a latency that exceeds or is less than the target latency. For example, if the target latency is one second, output on the first device is associated with a latency of three seconds, and output on the second device is associated with a latency of half of a second, then output of the first and second devices are not synchronized. A viewer associated with the first device may see an event that occurs during the output of the at least one content 3.5 seconds after the viewer associated with the second device has already seen the event. Accordingly, the output speed associated with at least one of the first or second devices may need to be adjusted in order to synchronize output on the two devices.

To synchronize output on the two devices, the output speed associated with at least one of the first or second devices may be adjusted to equal the target latency. If the output speed associated with either the first or second device is already equal to the target latency, then the output speed associated with that device may not need to be changed in order to synchronize output on the two devices. The output speed associated with at least one of the first or second device may be adjusted during portions of the at least one content that are good candidates for output speed changes.

At step 404, at least one portion of the at least one content that is a good candidate for an output speed change may be determined. As discussed above with respect to method 300, the at least one portion of the at least one content may include portions during which an output speed change satisfies a threshold. The threshold may be a "detectability" threshold, indicative of whether a viewer of the at least one content may be able to detect an output speed change. A portion of the at least one content may satisfy the threshold if a viewer of the at least one content may not be able to detect an output speed change during that particular portion. To determine portions of the at least one content that satisfy the threshold, characteristics associated with the at least one content may be used.

For example, at least one of a genre, rate of speech, or rate of movement associated with the at least one content may be used to determine those portions of the at least one content that satisfy the threshold. An output speed change may be less detectable to viewers during a portion of the content that contains less motion or less speech. Accordingly, those portions of the at least one content that do not contain large amounts of motion or speech may be determined to be good candidates for an output speed change. Different genres may be able to be sped up or slowed down for different periods of time without being easily detectable to viewers of the content. For example, for sports content, output may be sped up or slowed down at any time but only for 5 seconds. For news content, output may be sped up or slowed down at any time but only for 10 seconds. For concert or music content, output may be sped up or slowed down at any time but only for 2 seconds. Accordingly, the portions of the at least one content that are good candidates for an output speed change may be limited to a particular period of time.

Determining the at least one portion of the at least one content that is a good candidate for an output speed change may comprise determining a rate of output speed change associated with each portion of content that is a good candidate for output speed change. The rate of output speed change associated with a particular portion of content may indicate how rapidly output of content may be sped up or slowed down during that portion of content without being easily detectable to viewers of the content. As discussed above, the rate of output speed change may be dependent upon the genre of content. Different genres may be able to be sped up or slowed down at different rates without being easily detectable to viewers of the content. For example, for sports content, output may be sped up to a maximum output rate of 120% or output may be slowed down to a minimum output rate of 90%. For news content, output may be sped up to a maximum output rate of 110% or may be slowed down to a minimum output rate of 90%. For concert or music content, output may be sped up to a maximum output rate of 105% or may be slowed down to a minimum output rate of 95%.

At step 406, the at least one portion of the at least one content during which the output speed change satisfies the threshold may be indicated. As discussed above with respect to the method 300, indications of the at least one portion may, for example, be inserted into a bitstream associated with the at least one content. The bitstream may be an encoded bitstream, such as the encoded bitstream 206 of FIG. 2. Each rate of output speed change associated with each portion of content may also be indicated. For example, an indication of the rate of output speed change associated with each portion of content may also be inserted into the bitstream associated with the at least one content.

The player associated with output of the at least one content may use the indications of the at least one portion of the at least one content during which the output speed change satisfies the threshold in order to synchronize output of the at least one content on the first and second devices. For example, the player may use the encoded bitstream, including the indications of the portions and the portion's respective rates of output speed change, in order to synchronize output of the at least one content on the first and second devices. To synchronize output of the at least one content on the first and second devices, an output speed of the at least one content may need to be adjusted on at least one of the first or second devices. At step 408, an output speed of the at least one content on the first device or the second device may be changed to synchronize output on the first and second devices. As discussed above, the output speed of the at least one content may be changed during the at least one portion of the at least one content during which the output speed change satisfies the threshold. Output speed changes during these portions may not be easily detectable to a viewer of the at least one content.

If the latency associated with both the first and second devices is (approximately, within an acceptable margin) equal to the target latency, then output of the two devices may be in sync. To ensure that latency associated with both the first and second devices is equal to the target latency, output speed associated with either or both of the first and second devices may need to be changed. This output speed change may be either an output speed increase or an output speed decrease. If the latency associated with either the first or second device exceeds the target latency, then the output speed for that device may need to be increased in order to reduce the latency associated with that particular device down to the target latency. For example, if the latency associated with the first device is three seconds and the target latency is one second, then the output speed of the first device may need to be increased in order to reduce the latency associated with the first device to one second. Conversely, if the latency associated with either the first or second device is less than the target latency, then the output speed for that device may need to be decreased in order to reduce data drain associated with that particular device down. Reducing the data drain associated with a particular device may reduce the risk of stalling and may increase the latency associated with that device to the target latency. An output speed may need to be increased or decreased on both the first and second device, or an output speed may need to be increased on the first device while an output speed may need to be decreased on the second device.

As described above, the method 400 may be used to synchronize output of content on a plurality of devices by adjusting, for each of the plurality of devices, the player output latency to equal a target latency. The target latency may be a non-zero constant player latency that each of the plurality of devices at different bandwidth data rates are able to handle. If new devices are added to the plurality of devices, the target latency may be adjusted. For example, if new subscribers are added to the plurality of devices, the target latency amongst the plurality of devices may be adjusted. The target latency may need to be adjusted, for example, if one or more of the newly added devices is able to handle a different non-zero constant player latency.

Regardless of whether the output speed change is an output speed decrease or increase, output speed changes may be made during the at least one portion of the at least one content during which the output speed change satisfies the threshold. As discussed above with respect to method 300, if it is determined that an output speed change is needed at a time during output of the at least one content that does not occur during the at least one portion, the player may wait until the start time of the at least one portion before the output speed change is made. For example if it is determined that the output of the at least one content on the first and second devices are not synchronized at a first time, and the first time does not occur during the at least one portion, then the player may wait until the start time of at least one portion occurring after the first time before changing the output speed.

As discussed above with respect to methods 300 and 400, it may be desirable to change the output speed of content during portions of the content that are good candidates for an output speed change. The portions of the content that are good candidates for an output speed change may include those portions of the content during which an output speed change may not be easily detected by viewers. Each of these portions may be associated with a rate of speed change that may indicate how drastically the content may be sped up or slowed down without being detected by viewers. However, as also discussed above and depicted in FIG. 2, each portion of content that is a good candidate for an output speed change may have a different duration. For example, some portions may be two seconds long, while other portions may be ten seconds long. While an output speed change may not be easily detectable during these shorter portions, the short duration of these portions, in combination with their respective rate of speed changes, may sometimes not be long enough to sufficiently reduce latency or data drain. If an output speed change during a shorter portion is not sufficient to reduce latency or data drain, then output speed of the content may need to be changed again during a later portion.

If latency needs to be changed by a certain amount, this may be accomplished in different ways. For example, one abrupt output speed change may be made over a short portion of time, one lessabrupt speed change may be made over a longer portion of time, or multiple output speed changes may be made over a longer portion of time. How likely each of these different methods for latency adjustment is to be detected by a viewer may depend on the portion of content during which the output speed change(s) is made. For example, an abrupt output speed change may be more likely to be detected by a viewer, but because the output speed change occurs quickly, this may mitigate the likelihood of detection. Conversely, a more gradual output speed change may be less easy to detect by a viewer, but because the output speed change is so gradual, it must occur over a longer period of time-thus increasing the likelihood of viewer detection. Accordingly, it may be desirable to adjust output speed of content in such a way as to minimize viewer detection.

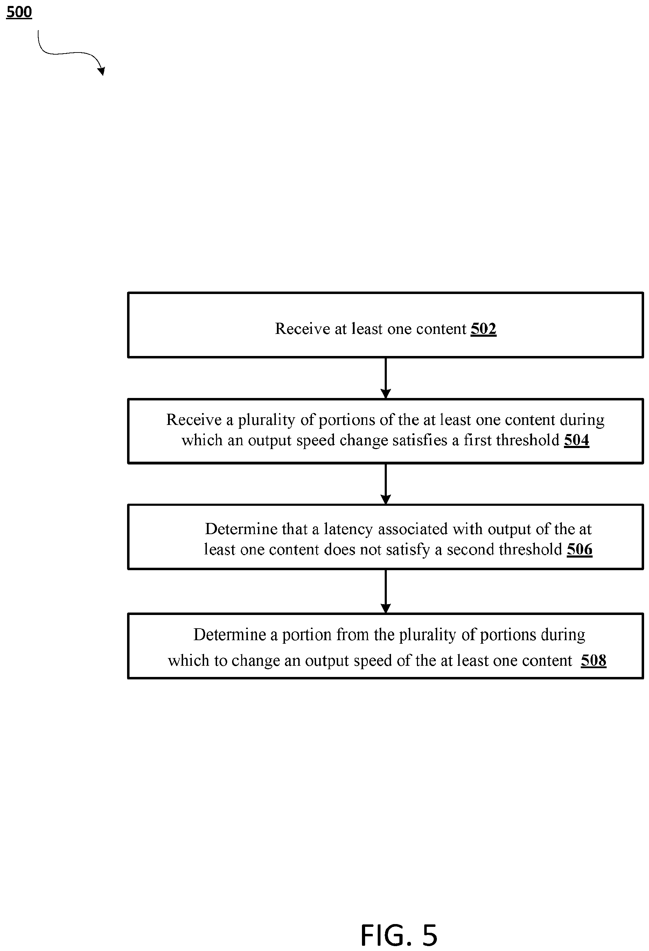

FIG. 5 illustrates an exemplary method 500 for adaptive output of content, such as the content 104 associated with FIG. 1. The method 500 may be performed, for example, by the system 100 of FIG. 1. The method 500 may be used to change output speed of content in such a way as to minimize the number of output speed changes. To minimize the number of output speed changes, portions of the content that are good candidates for output speed change may first be indicated. As discussed above, portions of the content that are good candidate for an output speed change may be those portions when an output speed change is less detectable to viewers of the content. Based on the duration and the rate of output speed change associated with each of these portions, it may be determined that one or more of these indicated portions is not long enough to sufficiently reduce latency or data drain. Output speed of the content may be maintained during these one or more portions that are not long enough to sufficiently reduce latency or data drain. Output speed of the content may instead be changed during at least one portion that is long enough to sufficiently reduce latency or data drain.

At step 502, at least one content may be received. For example, the at least one content may be received by a device 112 of FIG. 1, such as a set-top box. The at least one content may include video content, such as livestreaming video content. For example, the at least one content may include a livestreaming concert, sports program, news program documentary, or movie. The at least one content may be associated with one or more characteristics, such as genre, rate of speech, or rate of movement. For example, if the at least one content is associated with a genre, the genre may indicate if the at least one content is sports, news, music or concert, documentary, or movie content. If the at least one content is associated with a rate of speech, the rate of speech may indicate which portions of content include the most speech. If the content includes subtitles, the subtitles may indicate the rate of speech. If the at least one content is associated with a rate of movement, the rate of movement may indicate which portions of content include the most motion or the least motion. For example, an action scene in a movie may contain more motion than a less fast-moving scene, such as a transition scene.

At step 504, at least one indication of a plurality of portions of the at least one content during which an output speed change satisfies a first threshold may be received. For example, the at least one indication of a plurality of portions of the at least one content during which an output speed change satisfies a first threshold may be received by a device 112 of FIG. 1, such as a set-top box. The at least one indication of a plurality of portions of the at least one content during which an output speed change satisfies a first threshold may be received from an encoder, such as the encoder 108 or the encoder/packager 204. If the at least one indication of a plurality of portions of the at least one content during which an output speed change satisfies a first threshold is received from an encoder, the at least one indication of a plurality of portions of the at least one content during which an output speed change satisfies a first threshold may be included in an encoded bitstream associated with the at least one content.

As discussed above with respect to methods 300 and 400, the first threshold may be a "detectability" threshold, indicative of whether a viewer of the at least one content may be able to detect an output speed change. If the first threshold is a "detectability" threshold, the plurality of indicated portions of the at least one content may include portions during which an output speed change is not easily detectable by a viewer of the at least one content. The portions of the at least one content that satisfy the threshold may be determined based on characteristics associated with the at least one content.

For example, at least one of a genre, rate of speech, or rate of movement associated with the at least one content may be used to determine those portions of the at least one content that satisfy the threshold. An output speed change may be less detectable to viewers during a portion of the content that contains less motion or less speech. Accordingly, those portions of the at least one content that do not contain large amounts of motion or speech may be determined to be good candidates for an output speed change. Different genres may be able to be sped up or slowed down for different periods of time without being easily detectable to viewers of the content. For example, for sports content, output may be sped up or slowed down at any time but only for 5 seconds. For news content, output may be sped up or slowed down at any time but only for 10 seconds. For concert or music content, output may be sped up or slowed down at any time but only for 2 seconds. Accordingly, the portions of the at least one content that are good candidates for an output speed change may be limited to a particular period of time.

The at least one indication of the plurality of portions of the at least one content during which an output speed change satisfies the first threshold that is received may include at least one indication of a rate of output speed change associated with each of the plurality of portions. The rate of output speed change associated with a particular portion of content may indicate how rapidly output of content may be sped up or slowed down during that portion of content without being easily detectable to viewers of the content. As discussed above, the rate of output speed change may be dependent upon the genre of content. Different genres may be able to be sped up or slowed down at different rates without being easily detectable to viewers of the content. For example, for sports content, output may be sped up to a maximum output rate of 120% or output may be slowed down to a minimum output rate of 90%. For news content, output may be sped up to a maximum output rate of 110% or may be slowed down to a minimum output rate of 90%. For concert or music content, output may be sped up to a maximum output rate of 105% or may be slowed down to a minimum output rate of 95%.

It may be determined that an output speed of the at least one content needs to be changed. For example, it may be determined that the latency is too high or that data drain needs to be reduced. At step 506, it may be determined that a latency associated with output of the at least one content does not satisfy a second threshold. The latency associated with output of the at least one content may not satisfy the second threshold if an output speed of the at least one content needs to be changed. For example, the latency associated with output of the at least one content may not satisfy the second threshold if the latency is too high or if data drain needs to be reduced. For example, the latency associated with output of content on a first device may need to be adjusted in order to synchronize the output of the content on the first device with the output of the content on a second device.

As discussed above, while an output speed change may not be easily detectable during any portion selected from the plurality of portions, some of the portions from the plurality may have shorter durations than other portions. A particular portion with a relatively short duration, in combination with its respective rate of speed change, may not be long enough to sufficiently reduce latency or data drain. If an output speed change is made during this particular portion, then output speed of the content may need to be changed again during a later portion in order to sufficiently reduce latency or data drain. At step 508, a portion from the plurality of portions during which to change an output speed of the at least one content may be determined. The determined portion may be a portion that, in light of its duration and its rate of speed change, is long enough to sufficiently reduce latency or data drain.

For example, referring back to FIG. 2, it may be determined at time t₂ that an output speed does not satisfy the second threshold and needs to be changed. However, it may be determined that the portion 208b is not long enough in order to sufficiently reduce latency or data drain. This determination may be made based on the duration of the portion 208b, d₂, and the rate of speed change associated with the portion 208b. It an output speed change is made during portion 208b, another output speed change may need to be made during part of the later portion 208c in order to sufficiently reduce latency or data drain. It may be desirable to avoid making multiple output speed changes. It may also be determined that the later portion 208c is long enough in order to sufficiently reduce latency or data drain. This determination may be made based on the duration of the portion 208c, d₃, and the rate of speed change associated with the portion 208c. It an output speed change is made during portion 208c, this single output speed change may be enough to sufficiently reduce latency or data drain and multiple output speed changes may be avoided.

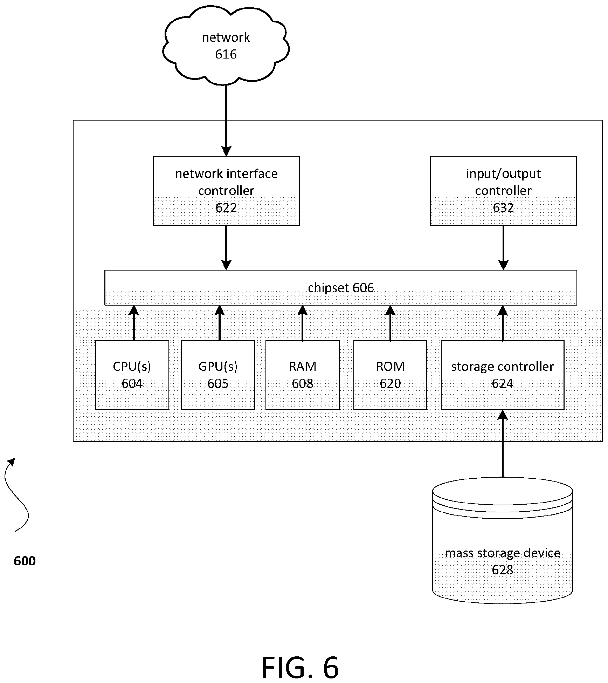

FIG. 6 depicts a computing device that may be used in various aspects. With regard to the example environment of FIG. 1, one or more of the content database 102, the encoder 108, or the at least one device 112 may be implemented in an instance of a computing device 600 of FIG. 6. The computer architecture shown in FIG. 6 shows a conventional server computer, workstation, desktop computer, laptop, tablet, network appliance, PDA, e-reader, digital cellular phone, or other computing node, and may be utilized to execute any aspects of the computers described herein, such as to implement the methods described in FIGS. 3-5.

The computing device 600 may include a baseboard, or "motherboard," which is a printed circuit board to which a multitude of components or devices may be connected by way of a system bus or other electrical communication paths. One or more central processing units (CPUs) 604 may operate in conjunction with a chipset 606. The CPU(s) 604 may be standard programmable processors that perform arithmetic and logical operations necessary for the operation of the computing device 600.

The CPU(s) 604 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adderssubtractors, arithmetic logic units, floating-point units, and the like.

The CPU(s) 604 may be augmented with or replaced by other processing units, such as GPU(s) 605. The GPU(s) 605 may comprise processing units specialized for but not necessarily limited to highly parallel computations, such as graphics and other visualization-related processing.

A user interface may be provided between the CPU(s) 604 and the remainder of the components and devices on the baseboard. The interface may be used to access a random-access memory (RAM) 608 used as the main memory in the computing device 600. The interface may be used to access a computer-readable storage medium, such as a read-only memory (ROM) 620 or non-volatile RAM (NVRAM) (not shown), for storing basic routines that may help to start up the computing device 600 and to transfer information between the various components and devices. ROM 620 or NVRAM may also store other software components necessary for the operation of the computing device 600 in accordance with the aspects described herein. The user interface may be provided by a one or more electrical components such as the chipset 606.

The computing device 600 may operate in a networked environment using logical connections to remote computing nodes and computer systems through local area network (LAN) 616. The chipset 606 may include functionality for providing network connectivity through a network interface controller (NIC) 622, such as a gigabit Ethernet adapter. A NIC 622 may be capable of connecting the computing device 600 to other computing nodes over a network 616. It should be appreciated that multiple NICs 622 may be present in the computing device 600, connecting the computing device to other types of networks and remote computer systems.

The computing device 600 may be connected to a storage device 628 that provides non-volatile storage for the computer. The storage device 628 may store system programs, application programs, other program modules, and data, which have been described in greater detail herein. The storage device 628 may be connected to the computing device 600 through a storage controller 624 connected to the chipset 606. The storage device 628 may consist of one or more physical storage units. A storage controller 624 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 600 may store data on a storage device 628 by transforming the physical state of the physical storage units to reflect the information being stored. The specific transformation of a physical state may depend on various factors and on different implementations of this description. Examples of such factors may include, but are not limited to, the technology used to implement the physical storage units and whether the storage device 628 is characterized as primary or secondary storage and the like.

For example, the computing device 600 may store information to the storage device 628 by issuing instructions through a storage controller 624 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 600 may read information from the storage device 628 by detecting the physical states or characteristics of one or more particular locations within the physical storage units.

In addition or alternatively to the storage device 628 described herein, the computing device 600 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 600.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A storage device, such as the storage device 628 depicted in FIG. 6, may store an operating system utilized to control the operation of the computing device 600. The operating system may comprise a version of the LINUX operating system. The operating system may comprise a version of the WINDOWS SERVER operating system from the MICROSOFT Corporation. According to additional aspects, the operating system may comprise a version of the UNIX operating system. Various mobile phone operating systems, such as IOS and ANDROID, may also be utilized. It should be appreciated that other operating systems may also be utilized. The storage device 628 may store other system or application programs and data utilized by the computing device 600.

The storage device 628 or other computer-readable storage media may also be encoded with computer-executable instructions, which, when loaded into the computing device 600, transforms the computing device from a general-purpose computing system into a special-purpose computer capable of implementing the aspects described herein. These computer-executable instructions transform the computing device 600 by specifying how the CPU(s) 604 transition between states, as described herein. The computing device 600 may have access to computer-readable storage media storing computer-executable instructions, which, when executed by the computing device 600, may perform the methods described in relation to FIGS. 4-6.

A computing device, such as the computing device 600 depicted in FIG. 6, may also include an input/output controller 632 for receiving and processing input from a number of input devices, such as a keyboard, a mouse, a touchpad, a touch screen, an electronic stylus, or other type of input device. Similarly, an input/output controller 632 may provide output to a display, such as a computer monitor, a flat-panel display, a digital projector, a printer, a plotter, or other type of output device. It will be appreciated that the computing device 600 may not include all of the components shown in FIG. 6, may include other components that are not explicitly shown in FIG. 6, or may utilize an architecture completely different than that shown in FIG. 6.

As described herein, a computing device may be a physical computing device, such as the computing device 600 of FIG. 6. A computing node may also include a virtual machine host process and one or more virtual machine instances. Computer-executable instructions may be executed by the physical hardware of a computing device indirectly through interpretation and/or execution of instructions stored and executed in the context of a virtual machine.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

The present methods and systems may be understood more readily by reference to the following detailed description of preferred embodiments and the examples included therein and to the Figures and their descriptions.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described herein may be used independently of one another, or may be combined in various ways. All possible combinations and sub-combinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as determined data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present embodiments may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its operations be performed in a specific order. Accordingly, where a method embodiment does not actually recite an order to be followed by its operations or it is not otherwise specifically stated in the embodiments or descriptions that the operations are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

It will be apparent to those skilled in the art that various modifications and variations may be made without departing from the scope or spirit of the present disclosure. Other embodiments will be apparent to those skilled in the art from consideration of the specification and practices described herein. It is intended that the specification and example figures be considered as exemplary only, with a true scope and spirit being indicated by the following embodiments.

Hereinafter, various characteristics of various embodiments of the invention will be highlighted in a set of numbered clauses or paragraphs. These characteristics are not to be interpreted as being limiting on the invention or inventive concept, but are provided merely as a highlighting of some characteristics of the invention as described in the description, without suggesting a particular order of importance or relevancy of such characteristics. The paragraphs include:
1. A method comprising:
   receiving at least one content;
   determining, based on a characteristic associated with the at least one content, at least one portion of the at least one content during which an output speed change satisfies a threshold; and
   indicating the at least one portion of the at least one content during which the output speed change satisfies the threshold.
2. The method of paragraph 1, wherein indicating the at least one portion of the at least one content during which the output speed change satisfies the threshold comprises:
   inserting, into a bitstream associated with the at least one content, at least one indication of the at least one portion of the at least one content during which the output speed change satisfies the threshold.
3. The method of paragraph 1, wherein determining the at least one portion of the at least one content during which the output speed change satisfies the threshold comprises:
   determining a rate of output speed change associated with the at least one portion of the at least one content during which the output speed change satisfies the threshold,
   wherein indicating the at least one portion of the at least one content during which the output speed change satisfies the threshold comprises indicating the rate of output speed change.
4. The method of paragraph 1, further comprising:
   determining, at a first time during output of the at least one content, to change the output speed of the at least one content;
   determining that the first time does not occur within the at least one portion of the at least one content during which the output speed change satisfies the threshold; and
   maintaining the output speed of the at least one content at the first time.
5. The method of paragraph 4, further comprising:
   determining that a start time of another portion of the at least one content during which the output speed change satisfies the threshold following the first time; and
   changing the output speed of the at least one content at the start time of the other portion of the at least one content during which the output speed change satisfies the threshold.
6. The method of paragraph 1, wherein the characteristic comprises at least one of:
   a genre associated with the at least one content;
   a rate of speech associated with the at least one portion of the at least one content; or
   a rate of movement associated with the at least one portion of the at least one content.
7. A method comprising:
   determining that output of at least one content on a first device and output of the at least one content on a second device are not synchronized;
   determining, based on a characteristic associated with the at least one content, at least one portion of the at least one content during which an output speed change satisfies a threshold;
   indicating the at least one portion of the at least one content during which the output speed change satisfies the threshold; and
   changing an output speed of the at least one content on the first device or the second device during the at least one portion of the at least one content during which the output speed change satisfies the threshold to synchronize output of the at least one content on the first device and output of the at least one content on the second device.
8. The method of paragraph 7, wherein indicating the at least one portion of the at least one content during which the output speed change satisfies the threshold comprises:
   inserting, into a bitstream associated with the at least one content, at least one indication of the at least one portion of the at least one content during which the output speed change satisfies the threshold.
9. The method of paragraph 7, wherein determining the at least one portion of the at least one content during which the output speed change satisfies the threshold comprises:
   determining a rate of output speed change associated with the at least one portion of the at least one content during which the output speed change satisfies the threshold,
   wherein indicating the at least one portion of the at least one content during which the output speed change satisfies the threshold comprises indicating the rate of output speed change.
10. The method of paragraph 7, wherein changing the output speed of the at least one content on at least one of the first device or the second device comprises:
   determining, at a first time during output of the at least one content, that a change in the output speed of the at least one content is needed;
   determining that the first time does not occur within the at least one portion of the at least one content during which the output speed change satisfies the threshold; and
   maintaining the output speed of the at least one content at the first time.
11. The method of paragraph 10, further comprising:
   determining that a start time of another portion of the at least one content during which the output speed change satisfies the threshold following the first time; and
   changing the output speed of the at least one content at the start time of the other portion of the at least one content during which the output speed change satisfies the threshold.
12. The method of paragraph 7, wherein determining that output of the at least one content on the first device and output of the at least one content on the second device are not synchronized comprises at least one of:
   determining that a latency associated with output of the at least one content on the first device exceeds or is below a target latency; or
   determining that a latency associated with output of the at least one content on the second device exceeds or is below the target latency.
13. The method of paragraph 7, wherein the characteristic comprises at least one of:
   a genre associated with the at least one content;
   a rate of speech associated with the at least one portion of the at least one content; or
   a rate of movement associated with the at least one portion of the at least one content.
14. A method comprising:
   receiving at least one content;
   receiving at least one indication of a plurality of portions of the at least one content during which an output speed change satisfies a first threshold;
   determining that a latency associated with output of the at least one content does not satisfy a second threshold; and
   determining, based on a difference between the latency and the second threshold, a portion from the plurality of portions during which to change an output speed of the at least one content.
15. The method of paragraph 14, further comprising:
   determining a rate of output speed change associated with each of the plurality of portions of the at least one content during which the output speed change satisfies the first threshold; and
   indicating each of the rates of output speed change.
16. The method of paragraph 15, wherein the plurality of portions of the at least one content during which an output speed change satisfies the first threshold comprises:
   a first portion having a first duration; and
   a second portion having a second duration, wherein the second duration is greater than the first duration.
17. The method of paragraph 16, wherein determining the portion from the plurality of portions during which to change the output speed of the at least one content comprises:
   comparing the difference between the latency and the second threshold to the first duration and the rate of output speed change associated with the first portion to determine that changing the output speed of the at least one content at a start time of the first portion does not reduce the latency or a data drain enough to satisfy the second threshold; and
   comparing the difference between the latency and the second threshold to the second duration and the rate of output speed change associated with the second portion to determine that changing the output speed of the at least one content at a start time of the second portion reduces the latency or the data drain enough to satisfy the second threshold.
18. The method of paragraph 14, wherein:
   the at least one content is received from a first source, and
   the at least one indication of the plurality of portions of the at least one content is received from a second source that is different from the first source.
19. The method of paragraph 14, wherein the at least one content comprises a video live stream.
20. The method of paragraph 14, wherein receiving the at least one indication of the plurality of portions of the at least one content during which the output speed change satisfies the first threshold comprises receiving a bitstream associated with the at least one content, the bitstream including the at least one indication of the plurality of portions of the at least one content during which the output speed change satisfies the first threshold.

## Claims

1. A method comprising:
receiving at least one content item;
determining, based on at least one of an amount of motion or an amount of speech associated with the at least one content item, at least one portion of the at least one content item during which the amount of motion associated with the at least one portion satisfies a threshold; and
indicating the at least one portion of the at least one content item in which a playback device can modify a rate of playback of the at least one content item.

2. The method of claim 1, wherein indicating the at least one portion of the at least one content item comprises:
inserting, into a bitstream associated with the at least one content item, at least one indication of the at least one portion of the at least one content item during which the amount of motion satisfies the threshold.

3. The method of claim 2, further comprising:
causing sending, to the playback device, of the bitstream.

4. The method of any one of claims 1-3, further comprising:
determining a rate of output speed change associated with the at least one portion of the at least one content item,
wherein indicating the at least one portion of the at least one content item comprises indicating the rate of output speed change.

5. The method of claim 4, wherein the rate of output speed change is inversely proportional to the amount of motion associated with the at least one portion.

6. The method of claim 4, wherein the rate of output speed change is inversely proportional to the amount of speech associated with the at least one portion.

7. The method of any one of claims 1-6, further comprising:
determining, at a first time during output of the at least one content item, to change the output speed of the at least one content item;
determining that the first time does not occur within the at least one portion of the at least one content item; and
maintaining the output speed of the at least one content item at the first time.

8. The method of any one of claims 1-7, further comprising:
determining, at a second time during output of the at least one content item, to change the output speed of the at least one content item;
determining that the second time occurs within the at least one portion of the at least one content item; and
changing the output speed of the at least one content item at the second time.

9. The method of any one of claims 1-8, wherein the threshold is indicative of whether a modification to the rate of playback of the at least one content item is perceptible to a viewer.

10. The method of any one of claims 1-9, wherein the at least one portion of the at least one content item in which the playback device can modify the rate of playback of the at least one content item comprises:
a first portion having a first duration; and
a second portion having a second duration, wherein the second duration is greater than the first duration.

11. The method of any one of claims 1-10, wherein the at least one content item is received at an encoder.

12. The method of any one of claims 1-11, wherein the playback device is a set-top box.

13. A device comprising:
one or more processors; and
memory storing instructions that, when executed by the one or more processors, cause the device to perform the method of any one of claims 1-12.

14. A computer-readable medium storing instructions that, when executed, cause the method of any one of claims 1-12 to be performed.

15. A system comprising:
a first computing device configured to perform the method of any one of claims 1-12; and
the playback device, wherein the playback device is configured to receive, from the first computing device, at least one indication of the at least one portion of the at least one content item in which the playback device can modify the rate of playback of the at least one content item.
